# EUROPÄISCHE PATENTSCHRIFT

(11) **EP 0 899 536 B1**
(45) Veröffentlichungstag und Bekanntmachung des Hinweises auf die Patenterteilung: **16.04.2003**
(21) Anmeldenummer: 98114911.5
(22) Anmeldetag: 08.08.1998
(51) Int. Cl.: G01B 5/00

(54) **Koordinatenmessgerät oder Bearbeitungsmaschine**
Coordinate measuring apparatus or working machine
Appareil de mesure de coordonnées ou machine d'usinage

(30) Priorität: 01.09.1997 DE 19738099
(43) Veröffentlichungstag der Anmeldung: 03.03.1999
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Matzkovits, Berthold, 89547 Gerstetten (DE); Götz, Klaus-Dieter, 74372 Sersheim (DE)

(56) Entgegenhaltungen:
- DE-A- 2 363 232
- DE-A- 3 205 894
- DE-A- 3 823 042
- DE-A- 4 026 990
- US-A- 4 976 043
- US-A- 5 610 846
- US-A- 5 649 368
- PATENT ABSTRACTS OF JAPAN vol. 010, no. 030 (P-426), 5. Februar 1986 (1986-02-05) & JP 60 181601 A (MITSUTOYO SEISAKUSHO:KK), 17. September 1985 (1985-09-17)
- PATENT ABSTRACTS OF JAPAN vol. 097, no. 001, 31. Januar 1997 (1997-01-31) & JP 08 247755 A (DAITO M II KK;TOKAI KIYOUHAN KK), 27. September 1996 (1996-09-27)
- PATENT ABSTRACTS OF JAPAN vol. 095, no. 010, 30. November 1995 (1995-11-30) & JP 07 190741 A (NIPPON TELEGR & TELEPH CORP), 28. Juli 1995 (1995-07-28)

## Beschreibung

Die Erfindung betrifft ein Koordinatenmeßgerät oder eine Bearbeitungsmaschine mit einem Bauteil, das an seinem einen Ende über einen Bauteilfuß beweglich auf zwei Führungen gelagert ist.

Ein derartiges Koordinatenmeßgerät ist beispielsweise aus der DE 40 26 990 A1 bekannt. Es handelt sich hierbei um ein sogenanntes Ständermeßgerät, bei dem das besagte Bauteil ein vertikal ausgerichteter Ständer ist. Am besagten Ständer ist an einem vertikal am Ständer verschiebbaren Kreuzschieber zusätzlich ein Meßarm horizontal beweglich gelagert, so daß der am Ende des Meßarms befestigte Taster hierdurch in zwei aufeinander senkrecht stehenden Koordinatenmeßrichtungen verschoben werden kann. Um den Taster nunmehr auch in der dritten Koordinatenmeßrichtung, die senkrecht auf die beiden anderen Koordinatenmeßrichtungen steht, bewegen zu können, ist an dem besagten Ständer ein Ständerfuß befestigt, der auf zwei voneinander beabstandeten Führungen an der Stirnfläche eines Meßtisches beweglich geführt ist.

Da die Führungen im Rahmen der Fertigungsungenauigkeiten hierbei nicht exakt parallel an der Stirnseite des Meßtisches befestigt werden können, kommt es hierbei zu Rotationsfehlern des Ständers, die sich darin äußern, daß die vertikale Ausrichtung des Ständers in Abhängigkeit von der Ausrichtung der Führungen schwankt. So wurde deshalb in der DE 40 26 990 A1 bereits vorgeschlagen, variabel verstellbare Elemente vorzusehen, über die der Abstand der Führungen von der Stirnseite der Meßplatte verändert werden kann, um hierdurch die Führungen derart zu justieren, daß die Führungen nahezu parallel ausgerichtet sind und somit die besagten Rotationsfehler nicht mehr auftreten.

Eine derartige Justage, bei der der Abstand der Führungen von der Meßplatte eingestellt werden muß, ist jedoch zeit- und damit kostenaufwendig.

Aufgabe der vorliegenden Erfindung ist es deshalb ein Koordinatenmeßgerät bzw. eine Bearbeitungsmaschine vorzuschlagen, mit der auf einfache Weise die besagten Rotationsfehler korrigiert werden können.

Die Aufgabe wird erfindungsgemäß gelöst, indem der Bauteilfuß derart ausgestaltet ist, daß sich bei Veränderung des Abstandes der Führungen das Bauteil in einer orthogonal zur Bewegungsrichtung liegenden Ebene dreht.

Der besondere Vorteil des erfindungsgemäßen Koordinatenmeßgerätes ist darin zu sehen, daß nunmehr zum Ausgleich des Rotationsfehlers nur noch der Abstand der Führungen entsprechend eingestellt werden muß. Dies ist erheblich einfacher, als den Abstand der Führungen von der Meßplatte zu justieren, da die Justierung nunmehr quer zur Befestigungsrichtung an der Meßplatte erfolgen kann. Damit können zunächst die beiden Führungen gerade und parallel zueinander befestigt werden und danach wird eine der beiden Führungen justiert, so daß der Abstand der Führungen entsprechend eingestellt wird.

Um diese Funktionalität zu realisieren weist der Bauteilfuß wenigstens einen Ausleger auf, der gegenüber dem Bauteil beweglich gelagert ist und sich auf einer ersten der beiden Führungen abstützt.

In einer besonders bevorzugten Ausführungsform ist der Ausleger zur beweglichen Lagerung über ein Gelenk mit dem Bauteilfuß verbunden und zwar derart, so daß bei Verringerung des Abstandes zwischen den Führungen Kräfte auftreten, die zu einer Rotation des betreffenden Bauteiles führen. Als Gelenk kommt hierbei neben üblichen Drehgelenken auch Kugelgelenke in Frage.

Die Rotation des Bauteiles bzw. des Bauteilfußes erfolgt hierbei um ein Gelenk im Bereich der zweiten Führung. Dies ist beispielsweise möglich, wenn der Bauteilfuß beabstandet von der zweiten Führung wenigstens ein entsprechendes Gelenk aufweist, über das der Ständer drehbeweglich an der zweiten Führung gelagert ist. Dies ist jedoch auch möglich, wenn, wie weiter unten noch detailliert beschrieben, das Bauteil um die Führung unmittelbar selber gedreht werden kann, was beispielsweise möglich ist, wenn die Führung eine Schiene und wenigstens einen auf der Schiene beweglich gelagerten Kugelumlaufschuh umfaßt.

Auch der Ausleger muß im Bereich der ersten Führung zusätzlich drehbeweglich gelagert sein. Dies kann entweder, wie oben bereits angedeutet, dadurch realisiert werden, indem der Ausleger unmittelbar auf der Führung drehbeweglich geführt ist oder indem der Ausleger über ein zusätzliches Gelenk verfügt, das im Bereich der Führung vorgesehen ist.

Der Ausleger muß jedoch nicht zwingend, wie in dem eben beschriebenen ersten Ausführungsbeispiel, drehbeweglich mit dem Bauteilfuß verbunden sein. In einer anderen, hier nicht näher gezeigten Variante, muß lediglich das Bauteil drehbeweglich auf der besagten zweiten Führung gelagert sein. Der Ausleger kann hierbei vollkommen starr auf der ersten Führung gelagert sein und kann über eine entsprechend gekrümmt ausgeformte Lauffläche mit einer schräg angeformten Fläche des Bauteiles derart zusammenwirken, so daß bei Verringerung des Abstandes zwischen den beiden Führungen die gekrümmte Fläche sich wie ein Keil unter die angeschrägte Fläche des Bauteiles schiebt und hierdurch das Bauteil verdreht wird. Um das Bauteil auch in die andere Richtung rotieren zu können, kann die gekrümmte Fläche und die abgeschrägte Fläche beispielsweise über eine mechanische Klemmung oder über Magneten aufeinander zugezogen werden.

Als Führungen können selbstverständlich beliebige Führungen wie beispielsweise Luftlagerführungen, Gleitführungen oder Wälzführungen verwendet werden. Wie bereits oben ausgeführt umfassen die Führungen jedoch in einer besonders vorteilhaften Ausführungsform Kugelumlaufschuhe und Schienen auf denen die Kugelumlaufschuhe geführt sind, da diese den besonderen Vorteil aufweisen, daß sich die Kugelumlaufschuhe um geringe Drehwinkel um die Längsachse der Schienen verdrehen lassen, so daß hierbei insbesondere auf ein Drehgelenk an der zweiten Führung zur Rotation des Bauteiles verzichtet werden kann.

Die Ausrichtung der beiden Führungen ist hierbei vollkommen unerheblich. Beispielsweise können die Führungen wie bereits im Zusammenhang mit der DE 40 26 990 A1 beschrieben, an der Stirnseite eines Meßtisches befestigt sein. Sie können selbstverständlich genau so gut auf der Oberseite des Meßtisches befestigt sein, an einer Wand, einer Raumdecke, einem Ständer usw..

Auch als Bauteil sind die unterschiedlichsten Varianten denkbar. Beispielsweise könnte genausogut der in der DE 40 26 990 A1 gezeigte Kreuzschieber, der zum Tragen des Meßarms vorgesehen ist, am Ständer des Ständermeßgerätes über die beschriebene Konstruktion geführt werden. Auch der Meßarm könnte so am Kreuzschieber geführt werden, wobei die Führungsschienen in diesem Falle auf dem Meßarm befestigt wären.

Weitere Vorteile und Weiterbildungen der Erfindung können den Figuren entnommen werden.

Hierin zeigen:
- Figur 1: eine perspektivische Ansicht eines erfindungsgemäßen Koordinatenmeßgerätes;
- Figur 2: die Seitenansicht eines Ausschnittes des betreffenden Koordinatenmeßgerätes;
- Figur 3: einen Ausschnitt des Meßtisches (1) und der hieran befestigten Schiene (2) im Schnitt; und
- Figur 4: die Seitenansicht eines Ausschnittes des betreffenden Koordinatenmeßgerätes in einer weitergebildeten Form.

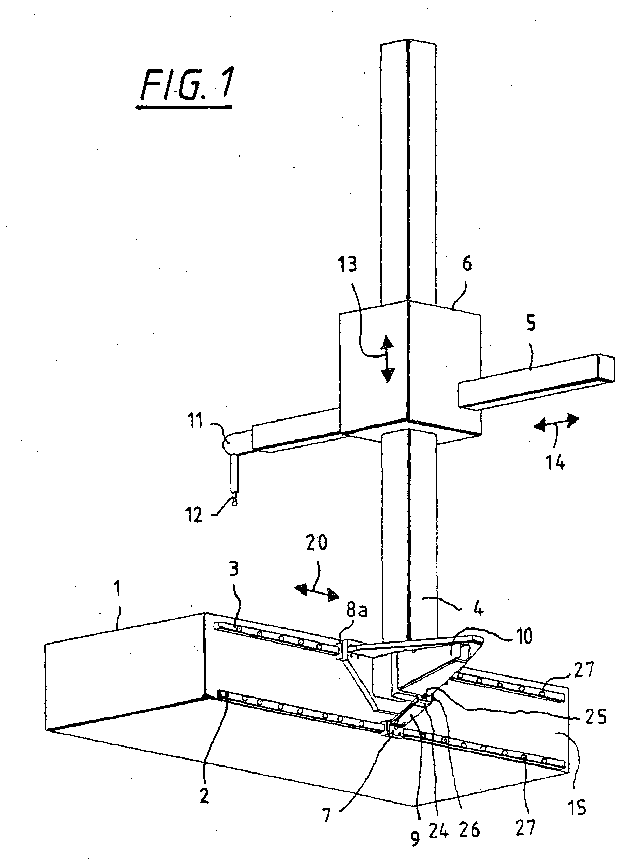

Figur 1 zeigt ein erfindungsgemäßes Koordinatenmeßgerät in einer perspektivischen Ansicht. Das Koordinatenmeßgerät weist einen Tastkopf (11) auf, an dem hier beispielhaft ein berührend messender Taster (12) befestigt ist, mit dem ein hier nicht näher gezeigtes zu vermessendes Werkstück angetastet und somit vermessen werden kann. Um das zu vermessende Werkstück räumlich vermessen zu können, ist der Tastkopf (11) an einem Meßarm (5) befestigt, der seinerseits an einem Kreuzschieber (6) in Richtung des Pfeils (14) verschiebbar ist. Dazu ist der Meßarm (5) über Luftlager oder Rollenlager im Kreuzschieber (6) gelagert und wird über einen Reibradantrieb in Richtung des Pfeils (14) verstellt. Die genaue Position des Meßarmes (5) wird festgestellt, indem ein hier nicht näher gezeigter Glasmaßstab, der auf dem Meßarm (5) befestigt ist, über einen entsprechenden optischen Abtastkopf abgelesen wird. Der Kreuzschieber (6) seinerseits ist ebenfalls über entsprechende Lager auf dem Ständer (4) in Richtung des Pfeiles (13) beweglich gelagert, wobei der Kreuzschieber (6) hierbei über entsprechende Reibradantriebe angetrieben wird. Die konkrete Höhe des Kreuzschiebers (6) wird hierbei vollkommen analog über nicht näher gezeigte auf dem Ständer befestigte Glasmaßstäbe und hiermit zusammenwirkende, im Kreuzschieber (6) angeordnete optische Abtastköpfe abgetastet. Um den Tastkopf nunmehr auch in der dritten Koordinatenmeßrichtung, die senkrecht auf die Koordinatenmeßrichtung in Richtung des Pfeils (13) und (14) steht, bewegen zu können, ist der Ständer (4), der hierbei beispielhaft das erfindungsgemäße Bauteil repräsentiert, über den Ständerfuß (10), der hierbei dem Bauelementefuß entspricht, an den Führungen (2, 7 bzw. 3, 8a, 8b) (8b hier nicht gezeigt) in Richtung des Pfeiles (20) beweglich gelagert, wobei die Schienen (2, 3) der Führungen (2, 7 bzw. 3, 8a, 8b) an einer Stirnseite des Meßtisches (1) befestigt sind. Der entsprechende Glasmaßstab mit optischen Abtastkopf zur Ermittlung der Position und der Reibradantrieb sind der Einfachheit halber nicht dargestellt.

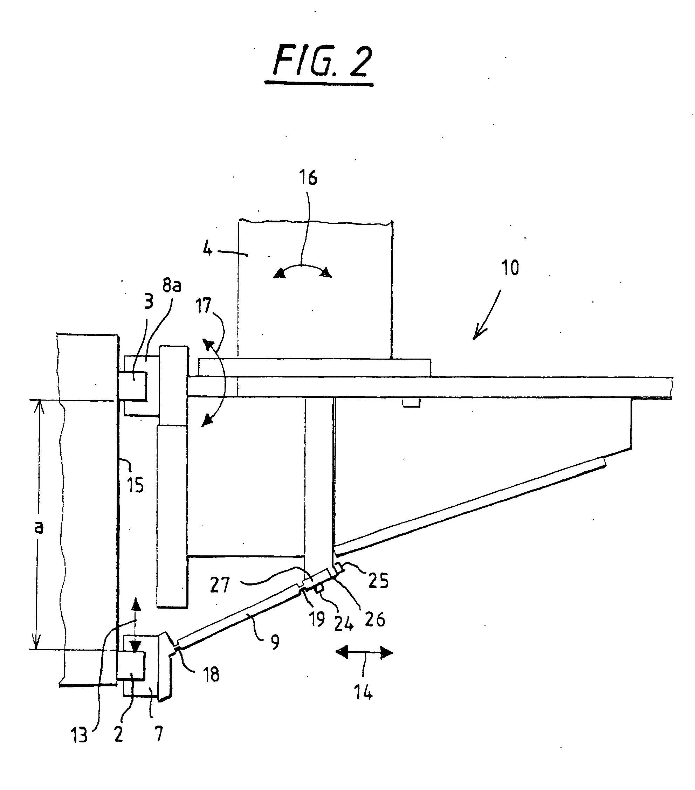

Die genaue Wirkungsweise des Ständerfußes (10) soll nunmehr anhand von Figur 2 beschrieben werden, in der der erfindungsgemäße Ständerfuß beschrieben ist.

Wie bereits oben beschrieben, ist der Ständerfuß (10) hierbei derart ausgeführt, daß er auf den beiden Führungen (2, 7 bzw. 3, 8a, 8b) (8b hier nicht gezeigt) läuft, wobei die Führungen hierbei aus Schienen (2, 3) und Kugelumlaufschuhen (7, 8a, 8b) bestehen, die auf den Schienen (2, 3) geführt sind. Derartige Führungen sind unter dem Namen "Kugel-Schienenführungen" bei der Firma Deutsche Star der Mannesmann Rexroth Gruppe erhältlich.

Wie bereits oben ausgeführt, wurde bei bislang bekannten Ständermeßgeräten für den Fall, daß die Schienen (2, 3) in Richtung des Pfeiles (14) nicht vollkommen parallel ausgerichtet waren, beispielsweise weil die Stirnfläche (15) des Meßtisches (1) uneben ist, oder die Schienen (2) oder (3) ungenau gefertigt sind, der Ständer (4) bei der Bewegung entlang der Schienen (2, 3) gemäß Pfeil (16) rotiert.

Dies hatte zur Folge, daß die Schienen (2, 3) in Richtung des Pfeils (14) korrigiert werden mußten, was nur über relativ umständlich einzustellende Abstandshalter ging, die den Abstand der Schienen (2, 3) von dem Meßtisch (1) veränderten.

Eine Justierung kann nun erfindungsgemäß wesentlich einfacher dadurch geschehen, indem ein auf der Führung (2, 7) sich abstützender Ausleger (9) vorgesehen wird, der über das Blattfedergelenk (19) drehbeweglich mit dem restlichen Ständerfuß (10) derart verbunden ist, so daß sich bei Veränderung des Abstandes (a) der Führungen (2, 7 bzw. 3, 8) der Ständer (4) in einer orthogonal zur eigentlichen Bewegungsrichtung (Pfeil 20) liegenden Ebene gedreht wird, so daß sich die Ausrichtung des Ständers ändert. Zusätzlich ist der Ausleger (9) noch über ein zweites Blattfedergelenk (18) mit dem Kugelumlaufschuh (7) verbunden.

Hierdurch ergibt sich nun folgender Effekt. Wird die Schiene (2) in Richtung des Pfeils (13) verschoben, so daß sich der Abstand (a) gegenüber der Schiene (3) also der Abstand (a) zwischen den Führungen (2, 7 bzw. 3, 8a, 8b) ändert, so wird hierdurch der Kugelumlaufschuh (7) gegenüber den Kugelumlaufschuhen (8a, 8b) angehoben oder abgesenkt. Da der Kugelumlaufschuh (7) über den Ausleger (9) drehbeweglich mit dem restlichen Ständerfuß (10) sowie insbesondere den Kugelumlaufschuhen (8a, 8b) verbunden ist, ergibt sich aufgrund dessen ein Drehmoment um die Führung (3, 8a, 8b). Hierdurch wird der ganze Ständerfuß (10) um die torsionsweich gelagerten Kugelumlaufschuhe (8a, 8b) entsprechend dem Pfeil (17) gedreht. Die Drehung um die Kugelumlaufschuhe (8a, 8b) hat nunmehr gleichzeitig zur Folge, daß auch der Ständer entsprechend dem Pfeil (16) verdreht wird.

Treten nunmehr Parallelitätsfehler bei den Schienen (2, 3) auf, so daß bei bislang bekannten Ständermeßgeräten der Ständer (4) entsprechend des Pfeiles (16) verdreht worden wäre, so können diese nun einfach dadurch ausgeglichen werden, indem der Abstand (a) zwischen den Schienen (2, 3) so eingestellt wird, daß der Ständer (4) in jedem Punkt auf den Schienen (2, 3) dieselbe vertikale Ausrichtung behält.

Die entsprechende Justierung kann hierbei derart erfolgen, wie dies im folgenden erläutert wird.

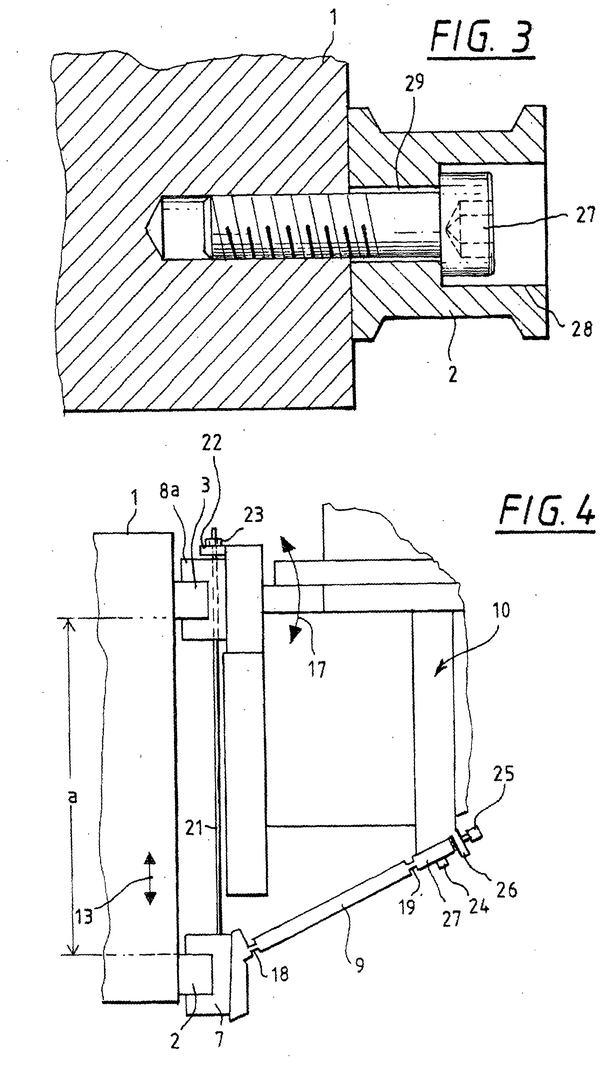

So werden in einem ersten Schritt zunächst die Schienen (2, 3) möglichst gerade und parallel über eine Reihe von Halteelementen, in diesem Falle Imbusschrauben (27), am Meßtisch (1) des Koordinatenmeßgerätes befestigt und ausgerichtet. Der Abstand (a) zwischen den Schienen (2, 3) sollte hierbei so bemessen sein, daß der Ständer (4) bei gegebener Geometrie und idealer Ausrichtung der Schienen (2, 3) genau vertikal ausgerichtet ist. Zur Befestigung der Schienen (2, 3) weisen die Schienen (2, 3) Bohrungen (28, 29) auf, deren Durchmesser größer ist als die entsprechenden Außendurchmesser des Gewindes und des Schraubenkopfes der Imbusschrauben (27), so daß die Schienen (2, 3) bei gelockerten Imbusschrauben (27) gegenüber den Imbusschrauben (27) verschoben und somit ausgerichtet werden können und nach der Ausrichtung festgezogen werden können. Zur Veranschaulichung des Halteprinzips ist Figur 3 vorgesehen, in der beispielhaft ein Teil des Meßtisches (1) und der über eine der Imbusschrauben (27) befestigten Schiene (2) im Schnitt dargestellt. Die Schiene (2) ist in dieser Figur 3 näherungsweise in einem für die verwendeten Kugelschienenführungen typischen Profil gezeigt, was in den anderen Figuren der Übersichtlichkeit halber vermieden wurde.

Im nächsten Schritt wird über die gesamte Verfahrlänge an unterschiedlichen Stellen die Rotation des Ständers (4) um die Bewegungsrichtung gemessen. Die Rotation wird hierbei über eine Neigungswasserwaage bestimmt.

Im darauffolgenden Schritt werden aus den Rotationsmessungen Abstandskorrekturwerte errechnet, um die der Abstand (a) zwischen den Schienen (2, 3) korrigiert werden muß. Die Errechnung kann hierbei einfach vorgenommen werden, da die Drehwinkeländerung des Ständers (4) näherungsweise proportional zur Änderung des Abstandes (a) ist. Der Proportionalitätsfaktor kann hierbei entweder analytisch anhand der geometrischen Beziehungen des Ständerfußes (10) ermittelt werden oder aber empirisch.

In einem letzten Schritt werden die Imbusschrauben der Schiene (2) gelockert und die Schiene (2) durch eine Hebeeinrichtung in den entsprechenden Abstand (a) zur Schiene (3) gebracht und die besagten Imbusschrauben (27) wieder nach und nach festgezogen, so daß an den betreffenden Imbusschrauben (27) der vorgesehene Abstand (a) zur Schiene (3) vorhanden ist.

Als Hebeeinrichtungen sind beispielsweise Hebeeinrichtungen denkbar, die nach dem Prinzip eines Wagenhebers arbeiten und die Schiene (2) gegenüber dem Boden abstützen.

Die Hebeeinrichtung kann aber auch integraler Bestandteil des Bauteilfußes (10) sein, wie dies beispielhaft Figur 4 darstellt. Hierzu kann beispielsweise eine Gewindestange (21) am Kugelumlaufschuh (7) befestigt sein, die im oberen Bereich des Ständerfußes (10) durch eine Bohrung einer an den Ständerfuß (10) befestigten Platte (22) durchgeführt ist. Auf der Oberseite der besagten Platte (22) ist hierbei eine Mutter (23) auf die Gewindestange aufgeschraubt, so daß bei Betätigung der Mutter (23) der Kugelumlaufschuh (7) in Richtung des Pfeils (13) und somit gegenüber dem Ständer (4) angehoben oder abgesenkt wird.

Der Abstand (a) wird hierbei durch einen speziellen, auf der Schiene (3) geführten Schlitten, der hier nicht näher gezeigt ist, bestimmt, an dem sich eine Meßuhr befindet, die den jeweiligen Abstand zur Schiene (2) am gewünschten Punkt mißt.

Zusätzlich können am besagten Bauteilfuß bzw. Ständerfuß (10) auch Justagemittel vorgesehen sein, über die die Befestigung des Auslegers (9) am Ständerfuß (10) justiert werden kann, um hierdurch die Ausrichtung des Ständers (4) zusätzlich justieren zu können. Die Justagemittel umfassen hierbei Imbusschrauben (24), die durch das Städerfußseitige Ende (27) des Auslegers (9) geschraubt sind und zwar vollkommen analog, wie bereits im Zusammenhang mit Figur 3 erläutert, indem die Bohrungen im Ende (27) größer sind als die Außendurchmesser der Gewinde und Schraubenköpfe der Imbusschrauben (24). Bei gelockerten Schrauben (24) kann damit das Ende (27) gegenüber dem Ständerfuß (10) bewegt werden.

Darüberhinaus umfassen die Justagemittel eine Platte (26), in der ein Gewinde vorgesehen ist, in das eine Schraube (25) eingeschraubt ist. Bei gelockerten Schrauben (24) kann nun durch Verdrehen der Schraube (25) das Ende (27) des Auslegers (9) gegenüber dem Bauteilfuß (10) verschoben werden um hierdurch die Ausrichtung des Ständers (4) zusätzlich zu justieren.

Wie bereits oben ausgeführt, können die Führungen (2, 7 bzw. 3, 8a, 8b) an den unterschiedlichsten Bauteilen befestigt sein und unterschiedlich ausgerichtet sein z.B. an einem Meßtisch, einer Wand, einer Decke, einem Ständer etc.. Sie können selbstverständlich auch auf unterschiedlich ausgerichteten Flächen befestigt sein. Es ist beispielsweise denkbar die Führung (2, 7) auf der Oberseite des Meßtisches (1) zu befestigen und die Führung (3, 8a, 8b) an der Stirnseite des Meßtisches (1) zu befestigen. Für diesen Fall müßte der Ständerfuß (10) sowie der Ausleger (9) natürlich entsprechend angepaßt werden.

## Patentansprüche

1. Koordinatenmeßgerät oder Bearbeitungsmaschine mit einem Bauteil (4), das an seinem einen Ende über einen Bauteilfuß (10) beweglich auf zwei Führungen (2, 7 bzw. 3, 8a, 8b) gelagert ist, wobei der Bauteilfuß (10) derart ausgestaltet ist, daß bei Veränderung des Abstandes (a) der Führungen das Bauteil (4) in einer orthogonal zur Bewegungsrichtung (Pfeil 20) liegenden Ebene (Pfeil 16) gedreht wird.

2. Koordinatenmeßgerät oder Bearbeitungsmaschine nach Anspruch 1, wobei der Bauteilfuß (10) wenigstens einen Ausleger (9) aufweist, der gegenüber dem Bauteil (4) beweglich gelagert ist und sich auf einer ersten der beiden Führungen (2, 7) abstützt.

3. Koordinatenmeßgerät oder Bearbeitungsmaschine nach Anspruch 2, wobei der Ausleger (9) über wenigstens ein Gelenk (19) mit dem Bauteil (4) bzw. dem Bauteilfuß (10) verbunden ist.

4. Koordinatenmeßgerät oder Bearbeitungsmaschine nach Anspruch 3, wobei der Ausleger (9) sowohl gegenüber der Führung (2, 7) wie auch gegenüber dem Bauteil (4) bzw. dem Bauteilfuß (10) mit je einem Gelenk (18, 19) drehbar gelagert ist.

5. Koordinatenmeßgerät nach Anspruch 3 oder 4, wobei die Gelenke Blattfedergelenke sind.

6. Koordinatenmeßgerät nach den Ansprüchen 1 bis 5, wobei die Führungen Kugelumlaufschuhe (7, 8a, 8b) und Schienen (2, 3) umfassen.

7. Koordinatenmeßgerät oder Bearbeitungsmaschine nach den Ansprüchen 1 bis 6, wobei das Bauteil ein Ständer (4) eines Ständermeßgerätes ist.

8. Koordinatenmeßgerät oder Bearbeitungsmaschine nach den Ansprüchen 2 bis 7, wobei am Bauteilfuß (10) eine Hebeeinrichtung (21, 22, 23) vorgesehen ist, die das sich auf der Führung abstützende Ende des Auslegers (9) gegenüber dem Bauteil (4) bzw. Bauteilfuß (10) anheben kann.

9. Koordinatenmeßgerät oder Bearbeitungsmaschine nach den Ansprüchen 2 bis 8, wobei am Bauteilfuß (10) Justagemittel (24, 25, 26) vorgesehen sind, über die die Befestigung des Auslegers (9) am Bauteil (4) bzw. Bauteilfuß (10) justiert werden kann.

## Claims

1. Co-ordinate-measuring instrument or processing machine having a part (4) which is movably mounted on two guides (2, 7 or 3, 8a, 8b) at one of its ends via a part foot (10), in which the part foot (10) is configured in such a way that in the event of a change in the spacing (a) of the guides the part (4) is rotated in a plane (arrow 16) lying orthogonal to the direction of movement (arrow 20).

2. Co-ordinate-measuring instrument or processing machine according to Claim 1, in which the part foot (10) has at least one boom (9), which is mounted movable with reference to the part (4) and is supported on a first one of the two guides (2, 7).

3. Co-ordinate-measuring instrument or processing machine according to Claim 2, in which the boom (9) is connected to the part (4) or to the part foot (10) via at least one joint (19).

4. Co-ordinate-measuring instrument or processing machine according to Claim 3, in which the boom (9) is rotatably mounted both with reference to the guide (2, 7) and with reference to the part (4) or the part foot (10) with the aid of a joint (18, 19) in each case.

5. Co-ordinate-measuring instrument according to Claim 3 or 4, in which the joints are leaf spring joints.

6. Co-ordinate-measuring instrument according to Claims 1 to 5, in which the guides comprise recirculating ball shoes (7, 8a, 8b) and rails (2, 3).

7. Co-ordinate-measuring instrument or processing machine according to Claims 1 to 6, in which the part is a column (4) of a column-type measuring instrument.

8. Co-ordinate-measuring instrument or processing machine according to Claims 2 to 7, in which provided on the part foot (10) is a lifting device (21, 22, 23) which can lift the end, supported on the guide, of the boom (9) with reference to the part (1) or part foot (10).

9. Co-ordinate-measuring instrument or processing machine according to Claims 2 to 8, in which there are provided on the part foot (10) adjusting means (24, 25, 26) via which the fastening of the boom (9) on the part (4) or part foot (10) can be adjusted.

## Revendications

1. Appareil de mesure de coordonnées ou centre d'usinage muni d'un élément (4) qui est logé au niveau de l'une de ses extrémités par le biais d'un pied d'élément (10) de manière à pouvoir se déplacer sur deux guides (2, 7 ou 3, 8a, 8b), sur lequel le pied d'élément (10) est configuré de telle manière qu'en cas de modification de l'écartement (a) des guides, l'élément (4) est tourné dans un plan (flèche 16) orthogonal au sens de déplacement (flèche 20).

2. Appareil de mesure de coordonnées ou centre d'usinage selon la revendication 1, sur lequel le pied d'élément (10) présente au moins un bras (9) qui est logé de manière à pouvoir se déplacer par rapport à l'élément (4) et qui s'appuie sur un premier des deux guides (2, 7).

3. Appareil de mesure de coordonnées ou centre d'usinage selon la revendication 2, sur lequel le bras (9) est relié avec l'élément (4) ou le pied d'élément (10) par au moins une articulation (19).

4. Appareil de mesure de coordonnées ou centre d'usinage selon la revendication 3, sur lequel le bras (9) est logé de manière à pouvoir tourner aussi bien par rapport au guide (2, 7) que par rapport à l'élément (4) ou au pied d'élément (10) avec à chaque fois une articulation (18, 19).

5. Appareil de mesure de coordonnées selon la revendication 3 ou 4, sur lequel les articulations sont des articulations à ressorts à lames.

6. Appareil de mesure de coordonnées selon les revendications 1 à 5, sur lequel les guides comprennent des patins à recirculation de billes (7, 8a, 8b) et des rails (2, 3).

7. Appareil de mesure de coordonnées ou centre d'usinage selon les revendications 1 à 6, sur lequel l'élément est un montant (4) d'un appareil de mesure à montant.

8. Appareil de mesure de coordonnées ou centre d'usinage selon les revendications 2 à 7, sur lequel un dispositif de levage (21, 22, 23) est prévu sur le pied d'élément (10), lequel peut lever l'extrémité du bras (9) qui s'appuie sur le guide par rapport à l'élément (4) ou au pied d'élément (10).

9. Appareil de mesure de coordonnées ou centre d'usinage selon les revendications 2 à 8, sur lequel des moyens d'ajustage (24, 25, 26) sont prévus sur le pied d'élément (10), lesquels permettent d'ajuster la fixation du bras (9) sur l'élément (4) ou le pied d'élément (10).
